# EUROPÄISCHE PATENTSCHRIFT

(11) **EP 2 520 394 B1**
(45) Veröffentlichungstag und Bekanntmachung des Hinweises auf die Patenterteilung: **30.03.2016**
(21) Anmeldenummer: 12164228.4
(22) Anmeldetag: 16.04.2012
(51) Int. Cl.: B23K 26/06, B23K 26/00, B23K 26/40, B23K 26/36, B23K 26/08, C03B 33/09

(54) **Vorrichtung und Verfahren zum Randentschichten und Kerben beschichteter Substrate mit zwei von der gleichen Seite auf das beschichtete transparente Substrat einwirkenden Laserquellen**
Device for and method of edge stripping and grooving coated substrates using two laser sources acting on the same side of the coated transparent substrate
Dispositif et procédé d'enlèvement de bord et de rainurage de substrats revêtus utilisant deux sources laser agissant sur le même côté du substrat transparent revêtu

(30) Priorität: 05.05.2011 DE 102011075328
(43) Veröffentlichungstag der Anmeldung: 07.11.2012
(73) Patentinhaber: INTERPANE Entwicklungs-und Beratungsgesellschaft mbH, 37697 Lauenförde (DE)
(72) Erfinder: Michel, Lars, 37671 Höxter (DE); Kappertz, Dr., Oliver, 33098 Paderborn (DE); Weis, Hansjörg, Dr., 37671 Höxter (DE); Herlitze, Lothar, Dr., 37691 Derental (DE)
(74) Vertreter: Körfer, Thomas

(56) Entgegenhaltungen:
- WO-A1-2010/048733
- JP-A- 58 143 553
- US-A- 5 622 540
- US-A- 5 910 260
- US-A1- 2001 035 401
- US-A1- 2008 197 118

## Beschreibung

Die Erfindung betrifft eine Vorrichtung und ein Verfahren zur Randentschichtung beschichteter Substrate und zum Einbringen einer Trennkerbe zur Trennung des beschichteten Substrats in einzelne Module z.B. Fensterscheiben entlang einem entschichteten Randstreifen gemäß dem Oberbegriff der Ansprüche 1 und 12 (siehe, z.B.) US 5 622 540 A).

Beschichtete, transparente Substrate, insbesondere aus Glas, werden häufig mit einer wärmereflektierenden Beschichtung bzw. einer Sonnenschutzbeschichtung als Architekturverglasung oder als Automobilglas verwendet. Bei der Herstellung von Dünnschichtsolarzellen wird eine Beschichtung aus mehreren Lagen auf ein zumeist transparentes Substrat aufgebracht, die die leitenden Front- und Rückkontakte sowie die fotoaktive Schicht bilden.

Die Beschichtung wird auf großflächige Glassubstrate aufgebracht. In einem separaten Arbeitsgang werden danach die einzelnen Module entsprechend der angeforderten Größe ausgeschnitten. Werden die Module z.B. zu Doppel- oder Multischeiben-Wärmeschutzglas zusammengesetzt, muss die Beschichtung entlang dem Rand des Moduls abgetragen werden. Bei Dünnschichtsolarzellen stellt ein entschichteter Randbereich zusätzlich eine vollständige elektrische Trennung von einem Rahmen sicher.

Zur Randentschichtung und zum Trennen des Substrats in einzelne Module sind eine Vielzahl von unterschiedlichen Verfahren bekannt, die innerhalb einer Fertigungslinie, aber zeitlich nacheinander und an unterschiedlichen Bearbeitungsstationen ausgeführt werden. Zur Reduzierung von Investitionskosten sind bereits Bearbeitungsstationen bekannt, an denen beide Arbeitsschritte durchgeführt werden können.

Die DE 10 2008 058 310 B3 beschreibt eine solche Vorrichtung zur Bearbeitung von Dünnschichtsolarzellen. Als Werkzeug zum Entschichten wird dabei ein Laserscanner, zum Kerben ein Laserkopf verwendet. Zum Randentschichten wird ein Laserstrahl über einen Laserscanner durch die unbeschichtete Seite des Substrats auf die Beschichtung gerichtet. Durch die Scanbewegung wird ein Randstreifen einer vorbestimmten Breite entschichtet. Entlang der Mittellinie eines Randstreifens wird eine Trennkerbe durch einen Laserkopf eingebracht, der auf der dem Laserscanner gegenüberliegenden Seite des Substrats angeordnet ist. Laserscanner und Laserkopf befinden sich somit auf jeweils einer unterschiedlichen Seite des Substrats. Eine solche Anordnung erschwert jedoch die Positionierung und Justierung des Laserkopfes gegenüber dem Laserscanner. Außerdem kann die Lage der Trennkerbe zum entschichteten Randstreifen während der Entschichtung nur unzureichend kontrolliert werden. Auch die Wartung eines auf unterschiedlichen Seiten des Substrats befindliches Lasersystem gestaltet sich aufwändig.

Es ist somit die Aufgabe der vorliegenden Erfindung eine Vorrichtung und ein Verfahren zum Randentschichten und Einbringen einer Trennkerbe in ein beschichtetes transparentes Substrat zu schaffen, die bzw. das eine einfache Justierung des Entschichtungswerkzeugs und des Kerbwerkzeugs ermöglicht, eine einfache und kontinuierliche Überwachung der beiden Vorgänge ermöglicht und einfach zugänglich ist.

Die Aufgabe wird durch die erfindungsgemäße Vorrichtung nach Anspruch 1 sowie dem erfindungsgemäßen Verfahren nach Anspruch 12 gelöst. In den Unteransprüchen sind vorteilhafte Weiterbildungen der erfindungsgemäßen Vorrichtung bzw. des erfindungsgemäßen Verfahrens dargestellt.

Die erfindungsgemäße Vorrichtung zur Randentschichtung und zum Kerben eines beschichteten transparenten Substrats umfasst eine erste Laserquelle, die an einer ersten Laseraustrittsstelle einen ersten Laserstrahl emittiert, zur Randentschichtung des beschichteten Substrats. Sie umfasst ebenfalls eine zweite Laserquelle, die an einer zweiten Laseraustrittsstelle einen zweiten Laserstrahl emittiert, zum Einbringen einer Kerbe in den entschichteten Randstreifen des Substrats. Die erste Laseraustrittsstelle und die zweite Laseraustrittsstelle sind dabei auf der gleichen Seite bezüglich einer Oberfläche des Substrats angeordnet, sodass der erste Laserstrahl und der zweite Laserstrahl von der gleichen Seite auf das beschichtete transparente Substrat einwirken.

Damit kann zu jeder Zeit die Position des ersten und des zweiten Laserstrahls auf einer Oberfläche des Substrats kontrolliert werden. Da die erste und der zweite Laseraustrittsstelle auf der gleichen Seite des Substrats angeordnet sind, sind beide Laser bzw. Laseraustrittsstellen einfach zueinander positionier- und justierbar. Des Weiteren wird lediglich auf einer Seite des Substrats eine Absaugeinheit benötigt, sodass die Vorrichtung einen geringeren Platzbedarf hat, kostengünstig in der Anschaffung ist und einfacher betrieben werden kann.

Dabei ist es möglich die Randentschichtung und das Kerben auf der der ersten und zweiten Laseraustrittsstelle zugewandten Oberfläche des Substrats oder auf der der ersten und zweiten Laseraustrittsstelle abgewandten Oberfläche des Substrats durchzuführen bzw. die Randentschichtung auf einer ersten Oberfläche des Substrats durchzuführen und die Kerbe auf einer der ersten Oberfläche gegenüberliegenden zweiten Oberfläche des Substrats einzubringen. Dies kann vorteilhafterweise dadurch erzielt werden, wenn der erste und der zweite Laserstrahl auf die der ersten Laseraustrittsstelle und der zweiten Laseraustrittsstelle zugewandte Oberfläche oder durch das Substrat hindurch auf die den beiden Laseraustrittsstellen abgewandte Oberfläche des Substrats bzw. auf eine den Laseraustrittsstellen abgewandte und eine den Laseraustrittsstellen zugewandte Oberfläche des Substrats fokussiert sind. Es besteht somit bei der vorgegebenen Lage der Laseraustrittsstellen keine Einschränkung bzgl. der Oberfläche des Substrats, die randentschichtet bzw. gekerbt wird.

Von Vorteil ist dabei auch, wenn der von der ersten Laseraustrittsstelle emittierte Laserstrahl eine über den Strahlquerschnitt konstante Energiedichteverteilung, ein sogenanntes Top-Hat-Profil, aufweist. Somit wird über den gesamten Querschnitt ein konstanter Energiebetrag in die Schicht eingetragen, sodass über den gesamten Querschnitt und insbesondere auch am Rand eine vollständige Abtragung der Beschichtung gewährleistet ist. Es kommt somit nicht zu ungewollten Farb- oder Funktionsänderungen der Beschichtung am Übergang zum entschichteten Randstreifen des Substrats. Dies wäre insbesondere für Architekturverglasung ästhetisch störend.

Zur Einbringung einer Kerbe in das Substrat, die als Trennlinie zum Brechen des Substrats in einzelne Module verwendet wird, ist der zweite Laserstrahl vorteilhafterweise direkt auf eine Oberfläche des Substrats fokussiert. Der von der zweiten Laserquelle emittierte Laserstrahl weist bevorzugt eine Gauß-förmige Energiedichteverteilung über den Strahlquerschnitt in radialer Richtung auf, sodass eine hohe Energiedichte auf einer sehr kleinen Fläche des Substrats wirkt und somit ein Schmelzen des Substrats sicherstellt und eine zum Brechen ausreichend tiefe und schmale Kerbe entsteht. Die eingebrachte Energie wird durch die gewählte Energiedichteverteilung optimal ausgenutzt.

Vorteilhafterweise kann ein Laser mit einer ersten Strahlformungseinheit die erste Laserquelle bilden, wobei der gleiche Laser mit einer Frequenz-Verdopplungseinheit und einer zweiten Strahlformungseinheit zur Formung einer Gauß-förmigen Energiedichteverteilung die zweite Laserquelle bildet. Dies stellt eine besonders kostengünstige Vorrichtung dar, da lediglich ein einziger Laser zum Entschichten als auch zum Kerben notwendig ist. Dies ist insbesondere möglich, da für die Einbringung einer Kerbe Laserlicht einer Wellenlänge zwischen 350nm und 800nm, bevorzugt zwischen 500 und 550nm verwendet wird, zur Randentschichtung das Laserlicht bevorzugt bei der etwa doppelten Wellenlänge günstig einsetzbar ist.

Das erfindungsgemäße Verfahren zur Randentschichtung und zum Kerben eines beschichteten transparenten Substrats umfasst die Verfahrensschritte einer Randentschichtung des beschichteten Substrats mit einer ersten Laserquelle, die an einer Laseraustrittsstelle einen ersten Laserstrahl emittiert, und einem Kerben des entschichteten Randstreifens des Substrats mit einer zweiten Laserquelle, die an einer zweiten Laseraustrittsstelle einen zweiten Laserstrahl emittiert, wobei die erste und die zweite Laseraustrittsstelle auf der gleichen Seite bezüglich der Oberfläche des Substrats angeordnet sind, sodass der erste Laserstrahl und der zweite Laserstrahl von der gleichen Seite auf das beschichtete transparente Substrat einwirken. Die Vorteile der erfindungsgemäßen Vorrichtung weist auch das erfindungsgemäße Verfahren auf.

In besonders vorteilhafter Weise lässt sich die Vorrichtung zum Randentschichten und Kerben eines mit einer silberbasierten wärmereflektierenden Schicht beschichteten Substrats anwenden. Die erfindungsgemäße Vorrichtung ist aber auch zur Randentschichtung und zum Kerben eines mit einer Sonnenschutz-Beschichtung und/oder mit einer elektrisch leitenden Beschichtung beschichteten transparenten Substrats anwendbar.

Ausführungsbeispiele der erfindungsgemäßen Vorrichtung bzw. des Verfahrens sind in den Zeichnungen beispielhaft dargestellt und werden anhand der nachfolgenden Beschreibung nachfolgend erläutert. Es zeigen:
- Fig. 1: einen Randbereich eines Zweischeiben-Isolierglases in Seitenansicht;
- Fig. 2: ein erstes Ausführungsbeispiel einer erfindungsgemäßen Vorrichtung zur Randentschichtung und zum Kerben in Draufsicht;
- Fig. 3a: das erste Ausführungsbeispiel einer erfindungsgemäßen Vorrichtung in Seitenansicht;
- Fig. 3b: ein zweites Ausführungsbeispiel einer erfindungsgemäßen Vorrichtung in Seitenansicht;
- Fig. 4: ein beschichtetes transparentes Substrat unter Einwirkung eines erfindungsgemäßen ersten und eines zweiten Laserstrahls in schematischer Darstellung;
- Fig. 5: eine Darstellung von erfindungsgemäßen Laserspots eines ersten und zweiten Laserstrahls auf einem beschichteten transparenten Substrat in Draufsicht und
- Fig. 6: eine erfindungsgemäße Anordnung einer erste und eine zweite Laserquelle mit einem einzigen Laser in schematischer Darstellung.

Einander entsprechende Teile sind in allen Figuren mit den gleichen Bezugszeichen versehen.

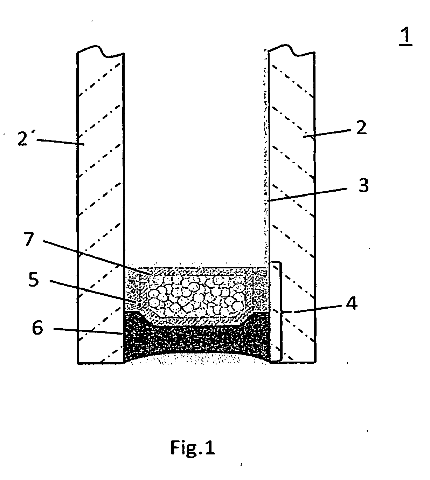

Fig. 1 zeigt einen Schnitt durch einen Randbereich eines Zweischeiben-Isolierglases 1. Dieses besteht aus zwei Substraten 2, 2', die durch einen Abstandshalter 7 im Randbereich der Substrate 2, 2' in einem festen Abstand zueinander gehalten werden. Der Abstandhalter 7 ist mittels eines ersten Dichtmittels 5 und eines zweiten Dichtmittels 6 mit den Substraten 2, 2' verklebt. Das Substrat 2' ist mit einer wärmeisolierenden Beschichtung 3 versehen, durch die Wärmestrahlung mit einer Wellenlänge im mittleren Infrarotbereich reflektiert wird.

Die Wärmeschutzschicht 3 besteht aus einem metallischen sowie keramischen Schichtsystem, dessen metallische Komponente häufig eine Silberschicht bildet, die die Wärmestrahlung besonders effektiv reflektiert und für sichtbares Licht transparent ist. Um eine gute Haftung zwischen dem Substrat und den Dichtmitteln 5, 6 zu erreichen, muss die Beschichtung 3 am Rand des Substrats im Bereich 4 entfernt werden.

In ähnlicher Weise wird Fassadenverglasung ohne sichtbare Rahmen, sogenanntes Structural Glazing, Autoglas, das mit einer Sonnenschutz-Beschichtung, z.B. basierend auf eine Zinnschicht, versehen ist, sowie Scheiben für Plasmamonitore oder auch bei Dünnschichtsolarzellen, am Rand entschichtet, um die geschnittenen Glasmodule einbauen bzw. einkleben zu können. Die nachfolgend beschriebene Vorrichtung zum Entschichten und Kerben von transparenten Substraten kann für all diese Anwendungen verwendet werden.

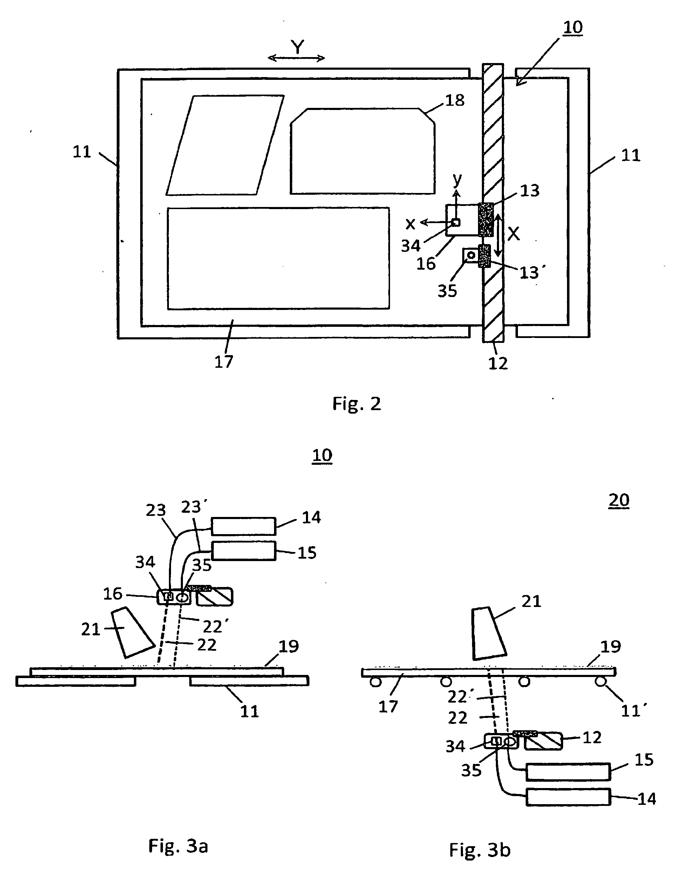

In Fig. 2 ist ein erstes Ausführungsbeispiel einer solchen Randentschichtungs- und Kerbvorrichtung 10 dargestellt. Ein beschichtetes Substrat 17 liegt auf einem Transportsystem 11 auf, das das Substrat 17, mindestens in eine Richtung, beispielsweise in Richtung des Doppelpfeils Y verschieben kann. Eine Brücke 12 überspannt das Transportsystem 11 und ist senkrecht zur Transportrichtung Y des Transportsystems 11 ausgerichtet. An der Brücke 12 ist eine erste Laseraustrittsstelle 34, die in einer 2-dimensionalen Verstelleinheit 16 integriert ist, über einen Werkzeugträger 13 angebracht. Eine zweite Laseraustrittsstelle 35, die zum Einbringen einer Kerbe in das beschichtete Substrat 17 dient, ist ebenfalls über einen Werkzeugträger 13' an der Brücke 12 befestigt. Die Werkzeugträger 13, 13' sind in Richtung des Doppelpfeils X entlang der Brücke verschiebbar. Die Werkzeugträger 13, 13' können entweder einzeln, wie dargestellt, an der Brücke gehalten und unabhängig voneinander bewegt werden oder aber miteinander verbunden sein und zusammen bewegt werden. Die erste und zweite Laserquelle können auch an einem Computer-, insbesondere CNC-gesteuerter Gerätearm geführt sein.

Auf dem beschichteten Substrat 17 sind links von der Brücke 12 Konturen von Einzelmodulen 18 angedeutet. Entlang der eingezeichneten Kontur wird die Beschichtung in einem Streifen einer vorbestimmten Breite durch den Laserstrahl, der von der ersten Laseraustrittsstelle 34, die durch die 2-dimensionale Verstellvorrichtung 16 geführt ist, abgescannt und abgetragen. Innerhalb des entschichteten Randstreifens erzeugt der von der zweite Laseraustrittsstelle 15 emittierte Laserstrahl eine Kerbe, entlang derer das Modul mithilfe eines nicht dargestellten Brechrades oder Brechschwerts herausgebrochen wird. Somit kann der Randstreifen entlang einer beliebigen Kontur entschichtet und eingekerbt werden.

In Fig. 3a ist das erste Ausführungsbeispiel aus Fig. 2 in Seitenansicht dargestellt. Vom der ersten Laserquelle 14 wird der emittierte erste Laserstrahl 22 durch einen Lichtleiter 23 zur ersten Laseraustrittsstelle 34 in der 2-dimensionalen Verstelleinheit 16 geführt. In gleicher Weise ist der von der zweiten Laserquelle 15 emittierte zweite Laserstrahl 22' über einen Lichtleiter 23' zur zweiten Laseraustrittsstelle 35 an den Werkzeugträger 13', der hier durch die 2-dimensionalen Verstelleinheit 16 verdeckt ist, geführt.

Zur Justierung der Laserstrahlen 22, 22' sind die Laseraustrittsstellen 34, 35, die Lichtleiter 23, 23' sowie die Laserquellen 14, 15 einfach von einer Seite zugänglich. Somit ist die Positionierung der Laserstrahlen 22 und 22', die Einstellung der entsprechenden Abstrahlwinkel sowie die Fokussierung der beiden Laserstrahlen 22, 22' einfach möglich. Der erste Laserstrahl 22 ist hier auf die Beschichtung 19, die auf der der ersten Laseraustrittsstelle 34 und der zweiten Laseraustrittsstelle 35 zugewandten Oberfläche des Substrats 17 aufgebracht ist, fokussiert und sprengt diese in Rückwärtsrichtung, also gegen die Ausbreitungsrichtung des ersten Laserstrahls 22, ab. Eine Absaugeinheit 21 nimmt die abgesprengten Partikel der Beschichtung 19 auf.

Fig. 3b zeigt ein zweites Ausführungsbeispiel 20 der erfindungsgemäßen Vorrichtung. Dabei sind die Brücke 12 sowie die erste Laseraustrittsstelle 34 und die zweite Laseraustrittsstelle 35 auf der, der beschichteten Oberfläche des Substrats 17 gegenüberliegenden Seite des Substrats 17 angeordnet. In diesem Fall wird der erste Laserstrahl 22 durch das transparente Substrat 17 hindurch auf die Beschichtung 19 fokussiert und sprengt in Ausbreitungsrichtung des Strahls, auch Vorwärtsrichtung genannt, die Beschichtung 19 von der Oberfläche des Substrats 17 ab. Die Beschichtungspartikel werden durch die Absaugeinheit 21, die auf der beschichteten Oberfläche des Substrats 17 zugewandten Seite angeordnet ist, aufgenommen. Der zweite Laserstrahl 22'tritt durch das Substrat 17 ein und ist ebenfalls auf die der Eintrittsseite gegenüberliegende Oberfläche fokussiert.

Damit das Substrat 17 von unten zugänglich ist, werden der erste Laser 14 und der zweite Laser 15 zwischen z.B. Förderrollen eines Transportsystems 11' auf das Substrat 17 gerichtet. Ein Transportsystem 11 z.B. in Form eines Schneidetisches, wie in Fig. 2 und 3a dargestellt, weist dazu einen Spalt auf, durch den der erste und zweite Laserstrahl 22, 22' auf das Substrat 17 gerichtet werden kann.

Als erste Laserquelle 14 zur Entfernung der Beschichtung 19 eignen sich insbesondere Festkörperlaser, wie z.B. Neodym (Nd) oder Ytterbium (Yb) dotierte YAG-Laser, aber auch Er:YAG-Laser, Diodenlaser oder Farbstofflaser, die Licht einer Wellenlänge zwischen 1000nm und 1600nm bevorzugt vom 1000nm und 1100nm emittieren. Licht in diese nahen Infrarot-Wellenlängenbereich zwischen 1000nm und 1600nm wird von Silber gut absorbiert, wohingegen Strahlung höherer Wellenlänge im mittleren InfrarotBereich reflektiert und somit zur Wärmeerhaltung genutzt wird. Die erste Laserquelle 14 wird bevorzugt im gepulsten Modus mit einer Pulsdauer zwischen 10ns und 100ns, bevorzugt einer Pulsdauer zwischen 25ns und 35ns betrieben. Die bevorzugte Pulsenergiedichte beträgt zwischen 0,1 J/cm² bis 1 J/cm².

Die zweite Laserquelle 15 zum Einbringen einer Kerbe in das Substrat 19 emittiert bevorzugt Laserlicht einer Wellenlänge zwischen 350nm und 800nm, bevorzugt zwischen 500nm und 550nm. Diese Wellenlänge führt zu einer nichtlinearen Bandlücken-Absorption im Substrat 19 und damit zu einer effiziente Aufheizung des Substrats 19 im Bereich des Strahlfokus. Die zweite Laserquelle 15 ist ebenfalls im gepulsten Modus mit einer Pulsdauer zwischen 10ns und 100ns, bevorzugt zwischen 25ns und 35ns, besonders bevorzugt mit 30ns, betrieben. Die Pulsenergiedichte beträgt zwischen 0,5 kJ/cm² und 1,5 kJ/cm².

Wird die Kerbe, wie in Fig. 3a dargestellt, auf der der zweiten Laseraustrittsstelle (35) zugewandten Oberfläche des Substrats eingebracht, ist auch ein CO₂-Laser als zweite Laserquelle (15) verwendbar. Die Strahlung des CO₂-Laser wird direkt an der zugewandten Oberfläche des Substrats absorbiert.

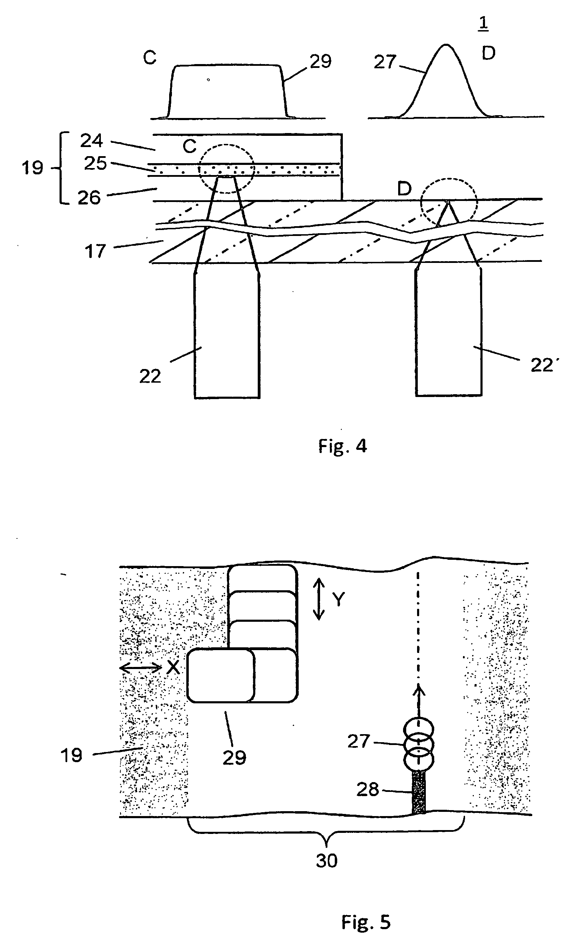

Zur Randentschichtung wird, wie in Fig. 4 in vergrößerter schematischer Darstellung gezeigt, der von der ersten Laserquelle 14 emittierte Laserstrahl 22 auf die Beschichtung 19 fokussiert, und von der Schicht mit der höchsten Absorptionsrate für das aufgestrahlte Laserlicht absorbiert. Bei einem Substrat 17 mit Wärmeschutzbeschichtung wird der erste Laserstrahl 22 somit von einer Infrarot (IR) Strahlung reflektierende Metallschicht, wie z.B. eine Silberschicht 25, absorbiert, die zwischen einer transparenten dielektrische Unterschicht 26 sowie einer transparenten dielektrischen Oberschicht 24 angeordnet ist. Die vom ersten Laserstrahl 22 in die Silberschicht 25 eingetragene Energie führt zur Verdampfung des Silbers. Die durch den hohen Dampfdruck erzeugte Druckwelle sprengt die benachbarte Unterschicht 26 und Oberschicht 24 mit ab. Die abgesprengten Partikel werden in Vorwärtsrichtung beschleunigt und durch die Absaugeinheit 21 aufgenommen.

Der erste Laserstrahl 22 weist über einen bevorzugt rechteckigen bzw. quadratischen Strahlquerschnitt eine konstante Energiedichteverteilung auf. Diese ist vergrößert mit dem Buchstaben C gekennzeichnet über dem ersten Laserstrahl 22 in Fig. 4 dargestellt. Eine solche Energiedichteverteilung wird auch Top-Hat-Profil genannt. Durch diese Energieverteilung wird auf der gesamten Breite des Strahls die Beschichtung 19 abgesprengt und somit mit einem Laserschuss eine im mm²-Bereich große Fläche der Beschichtung 19 abgetragen.

Der zweite Laserstrahl 22' ist auf eine Oberfläche des Substrats 17 fokussiert und weist im Gegensatz zum ersten Laserstrahl 22 einen z.B. kreis- oder ellipsenförmigen Strahlquerschnitt und eine Gauß-förmige Energiedichteverteilung D in radialer Richtung über den Strahlquerschnitt auf. Dadurch wird insbesondere im Zentrum des Strahls eine hohe Energiedichte erreicht, sodass das Substrat dort schmilzt und eine Kerbe bildet.

In Fig. 4 ist eine Abtragung der Beschichtung in Vorwärtsrichtung dargestellt. Dazu tritt der erste Laserstrahl 22 durch die unbeschichtete Oberfläche in das Substrat 17 ein. Der Fokus des ersten Laserstrahls 22 ist auf die Beschichtung 19 fokussiert. Der zweite Laserstrahl 22' ist hier auf die Oberfläche des Substrats 17, auf der die Beschichtung 19 angeordnet war, gerichtet. Es ist ebenfalls möglich, den zweiten Laserstrahl 22' auf die der beschichteten Oberfläche gegenüberliegenden Oberfläche zu fokussieren und dort das Substrat 17 aufzuschmelzen und eine Kerbe einzubringen. Beim Trennen des Substrats in einzelne Module muss lediglich das Brechwerkzeug an der der Kerbe gegenüberliegenden Oberfläche angesetzt werden.

Fig. 5 zeigt eine Abfolge von Laserspots 29 des ersten Laserstrahls 22, die auf die Beschichtung 19 des Substrats 17 fokussiert sind. Der Strahlquerschnitt des ersten Laserstrahls 22 ist dabei rechteckig, bevorzugt quadratisch mit einer Kantenlänge von etwa 1mm bis 5mm, sodass ein geradlinier Rand des entschichteten Randbereichs 30 entsteht. Um eine vollständige Entschichtung zu gewährleisten überlappen aufeinanderfolgende Laserspots beispielsweise um die Hälfte, sodass im Mittel jeder Bereich der Beschichtung mit zwei Laserpulsen beschossen wird. Die flächige Abtragung der Beschichtung 19 wird durch ein Bewegen des ersten Laserstrahls 22 in x- bzw. y-Richtung durch die 2-dimensionale Verstelleinheit erreicht.

Ein Laserspot 27 des zweiten Laserstrahls 22' weist bevorzugt einen runden oder elliptischen Strahlquerschnitt mit einem Fokusdurchmesser von etwa 100µm auf und trägt durch die Gauß-förmige Energiedichteverteilung einen höheren Energiebetrag pro Fläche in das Substrat ein. Benachbarte Laserspots 27 des zweiten Laserstrahls überlappen, sodass eine gleichmäßig tiefe, durchgängige Kerbe erzeugt wird. Die Kerbe wird in den entschichteten Randbereich 30 eingebracht. Dazu ist der zweite Laser 15 örtlich dem ersten Laser 14 nachfolgend.

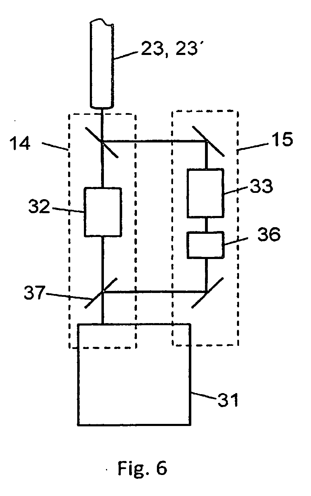

Fig. 6 zeigt eine erste und eine zweite Laserquelle 14, 15, die durch einen einzigen Laser 31 gespeist wird. Der vom Laser 31 erzeugte Laserstrahl wird durch eine erste Strahlformungseinheit 32 geführt und bildet somit die erste Laserquelle 14. Der Lichtstrahl wird in einen Lichtleiter 23 eingespeist und zur nicht dargestellten Lichteintrittsstelle 34 geführt. Für die zweite Lichtquelle 15 wird der vom Laser 31 emittierte Laserstrahl über Umlenkspiegel 37 durch eine Frequenzverdopplungseinheit 36 und eine zweite Strahlformungseinheit 33 geführt und beispielsweise mit einem weiteren Umlenkspiegel in den Lichtleiter 23', der mit dem Lichtleiter 23 identisch sein kann, eingespeist.

Die Erfindung ist nicht auf die beschriebenen Ausführungsbeispiele beschränkt. Durch die vorliegende Vorrichtung und das beschriebene Verfahren können nicht nur geradlinige entschichtete Randstreifen sondern beliebige, auch gebogene oder spitzwinklige Konturen, mit einem entschichteten Randstreifen versehen werden. Alle beschriebenen und/oder bezeichneten Merkmale können im Rahmen der Erfindung vorteilhaft miteinander kombiniert werden.

## Patentansprüche

1. Vorrichtung (10, 20) zur Randentschichtung und zum Kerben eines beschichteten transparenten Substrates (17), mit einer ersten Laserquelle (14) zur Randentschichtung des beschichteten Substrats (17), einer zweiten Laserquelle (15) zum Einbringen einer Kerbe in den entschichteten Randstreifen (30) des Substrats (17), **gekennzeichnet durch :**
ein Transportsystem (11, 11') zur Auflage des mit einer Beschichtung (19) versehenen transparenten Substrats (17) und Verschiebung des Substrats in einer x-Richtung,
eine Brücke (12), die auf einer Seite einer Oberfläche des Substrats (17) und senkrecht zum Transportsystem (11, 11') angeordnet ist, wobei an der Brücke eine erste Laseraustrittsstelle (34) und eine separate zweite Laseraustrittstelle (35) in einer y-Richtung senkrecht zur x-Richtung bewegbar angebracht sind,
eine Verstelleinheit (16), über welche die erste Laseraustrittsstelle (34) zur Randentschichtung an der Brücke (12) gehalten ist, wobei die Verstelleinheit (16) ausgebildet ist, um zur flächigen Abtragung der Beschichtung (19) den ersten Laserstrahl (22) in x- bzw. y-Richtung über das zu entschichtende Substrat (17) zu bewegen,
wobei die erste Laserquelle (14) an der ersten Laseraustrittsstelle (34) einen ersten Laserstrahl (22) emittiert, und
wobei die zweite Laserquelle an der zweiten Laseraustrittsstelle (35) einen zweiten Laserstrahl (22') emittiert.

2. Vorrichtung nach Anspruch 1,
**dadurch gekennzeichnet,**
**dass** der erste und der zweite Laserstrahl (22, 22') auf die der ersten Laseraustrittsstelle (34) und der zweiten Laseraustrittsstelle (35) zugewandte Oberfläche des Substrats (17) fokussiert sind oder durch das Substrat (17) hindurch auf die den beiden Laseraustrittsstellen (34, 35) abgewandte Oberfläche des Substrats (17)
fokussiert sind oder auf eine den Laseraustrittsstellen (34, 35) abgewandte Oberfläche und eine den
Laseraustrittsstellen (34, 35) zugewandte Oberfläche des Substrats (17) fokussiert sind.

3. Vorrichtung nach Anspruch 1 oder 2,
**dadurch gekennzeichnet,**
**dass** der erste Laserstrahl (22) eine über den
Strahlquerschnitt im wesentlichen konstante Energiedichteverteilung, insbesondere ein Top-Hat-Profil, aufweist.

4. Vorrichtung nach Anspruch 3,
**dadurch gekennzeichnet,**
**dass** die Strahlquerschnitte von zwei aufeinander folgenden ersten Laserstrahlen (22) zur Hälfte überlappen.

5. Vorrichtung nach einem der Ansprüche 1 bis 4,
**dadurch gekennzeichnet,**
**dass** die erste Laserquelle(14) Laserlicht einer Wellenlänge zwischen 1000nm und 1600nm, bevorzugt zwischen 1000nm und 1100nm, besonders bevorzugt bei 1020nm und 1070nm, emittiert und/oder die erste Laserquelle (14) im gepulsten Modus mit einer Pulsdauer zwischen 1ns und 100ns, bevorzugt zwischen 25ns und 35ns, betrieben wird und/oder die erste Laserquelle (14) eine Pulsenergiedichte von 0,1 J/cm² bis 1 J/cm² aufweist.

6. Vorrichtung nach einem der Ansprüche 1 bis 5,
**dadurch gekennzeichnet,**
**dass** die zweite Laserquelle (15) direkt auf eine Oberfläche des Substrats (17) fokussiert ist.

7. Vorrichtung nach einem der Ansprüche 1 bis 6,
**dadurch gekennzeichnet,**
**dass** der zweite Laserstrahl (22') eine Gauß-förmige Energiedichteverteilung über den Strahlquerschnitt in radialer Richtung aufweist.

8. Vorrichtung nach einem der Ansprüche 1 bis 7,
**dadurch gekennzeichnet,**
**dass** die zweite Laserquelle (15) Laserlicht einer Wellenlänge zwischen 350nm und 800nm, bevorzugt von 500nm bis 550nm, emittiert und/oder die zweite Laserquelle (15) im gepulsten Modus mit einer Pulsdauer zwischen 1ns und 100ns, bevorzugt zwischen 25ns und 35ns, betrieben wird und/oder die zweite Laserquelle (15) eine Pulsenergiedichte zwischen 0,5 kJ/cm² und 1,5 kJ/cm² aufweist.

9. Vorrichtung nach einem der Ansprüche 1 bis 8,
**dadurch gekennzeichnet,**
**dass** ein Laser (31) mit einer ersten Strahlformungseinheit (32) die erste Laserquelle (14) bildet und der gleiche Laser (31) mit einer Frequenzverdoppelungseinheit (36) und einer zweiten Strahlformungs-Einheit (33) die zweite Laserquelle (15) bildet.

10. Vorrichtung nach Anspruch 2 und 6,
**dadurch gekennzeichnet,**
**dass** der erste Laserstrahl (22) und der zweite Laserstrahl (22') auf die der ersten Laseraustrittsstelle (14) und der zweiten Laseraustrittsstelle (15) zugewandte Oberfläche oder auf die der ersten Laseraustrittsstelle (14) und der zweiten Laseraustrittsstelle (15) abgewandte Oberfläche des Substrats (17) fokussiert sind oder dass der erste Laserstrahl (22) und der zweite Laserstrahl (22') auf einander gegenüberliegende Oberflächen des Substrats (17) fokussiert sind.

11. Vorrichtung nach einem der Ansprüche 1 bis 10,
**dadurch gekennzeichnet,**
**dass** die Vorrichtung (10, 20) an eine Beschichtungsanlage, an einem Zuschneidetisch mit Brecheinrichtung oder an einer Isolierglas-Fertigungseinheit angeordnet ist.

12. Verfahren zur Randentschichtung und zum Kerben eines beschichteten transparenten Substrates, wobei
eine Randentschichtung des beschichteten Substrats mittels einer ersten Laserquelle (14) bewirkt wird, die an einer ersten Laseraustrittsstelle (34) einen ersten Laserstrahl (22) emittiert,
ein Kerben des entschichteten Randstreifens (30) des Substrats (17) mittels einer zweite Laserquelle (15) bewirkt wird, die an einer zweiten Laseraustrittsstelle (35) einen zweiten Laserstrahl (22') emittiert,
**dadurch gekennzeichnet,**
**dass** ein Transportsystem (11, 11') zur Auflage des mit einer Beschichtung (19) versehenen transparenten Substrats (17) eine Verschiebung des Substrats in einer y-Richtung bewirkt,
die erste Laseraustrittsstelle (34) und die zweite Laseraustrittstelle (35), die an einer Brücke (12) angebracht sind, die auf einer Seite einer Oberfläche des Substrats (17) und senkrecht zum Transportsystem (11, 11') angeordnet ist, in einer x-Richtung senkrecht zur y-Richtung bewegt werden, und
**dass** eine Verstelleinheit (16), über welche die erste Laseraustrittsstelle (34) zur Randentschichtung an der Brücke (12) gehalten ist, zur flächigen Abtragung der Beschichtung (19) den ersten Laserstrahl (22) in x- bzw. y-Richtung über das zu entschichtende Substrat (17) bewegt.

13. Verfahren nach Anspruch 12,
**dadurch gekennzeichnet,**
**dass** der erste und der zweite Laserstrahl (22, 22')auf die der ersten Laseraustrittsstelle (34) und der zweiten Laseraustrittsstelle (35) zugewandte Oberfläche des Substrats (17) fokussiert sind oder durch das Substrat (17) hindurch auf die den beiden Laseraustrittsstellen (34, 35) abgewandte Oberfläche des Substrats (17) fokussiert sind oder auf eine den Laseraustrittsstellen (34, 35) abgewandte Oberfläche und eine den Laseraustrittsstellen (34, 35) zugewandte Oberfläche des Substrats (17) fokussiert sind.

14. Verfahren nach Anspruch 12 oder 13,
**dadurch gekennzeichnet,**
**dass** der erste Laserstrahl (22) eine über den Strahlquerschnitt im wesentlichen konstante Energiedichteverteilung, insbesondere ein Top-Hat-Profil, aufweist.

15. Verfahren nach Anspruch 14,
**dadurch gekennzeichnet,**
**dass** die Strahlquerschnitte von zwei aufeinander folgenden ersten Laserstrahlen (14) zur Hälfte überlappen.

16. Verfahren nach einem der Ansprüche 12 bis 15, **dadurch gekennzeichnet,**
**dass** die erste Laserquelle(14) Laserlicht einer Wellenlänge zwischen 1000nm und 1600nm, bevorzugt von 1000nm bis 1100nm, besonders bevorzugt bei 1020nm und 1070nm, emittiert und/oder die erste Laserquelle (14) im gepulsten Modus mit einer Pulsdauer zwischen 1ns bis 100ns, bevorzugt zwischen 25ns und 35ns, betrieben wird und/oder die erste Laserquelle (14) eine Pulsenergiedichte von 0,1 J/cm² bis 1 J/cm² aufweist.

17. Verfahren nach einem der Ansprüche 12 bis 16,
**dadurch gekennzeichnet,**
**dass** der zweite Laserstrahl (22') direkt auf eine Oberfläche des Substrats (17) fokussiert wird.

18. Verfahren nach einem der Ansprüche 12 bis 17,
**dadurch gekennzeichnet,**
**dass** der zweite Laserstrahl (22') eine Gauß-förmige Energiedichteverteilung über den Strahlquerschnitt in radialer Richtung aufweist.

19. Verfahren nach einem der Ansprüche 12 bis 18,
**dadurch gekennzeichnet,**
**dass** die zweite Laserquelle (15) Laserlicht einer Wellenlänge zwischen 350nm und 800nm, bevorzugt von 500nm bis 550nm, emittiert und/oder die zweite Laserquelle (15) im gepulsten Modus mit einer Pulsdauer zwischen 1ns und 100ns, bevorzugt zwischen 25ns und 35ns, betrieben wird und/oder die zweite Laserquelle (15) eine
Pulsenergiedichte zwischen 0,5 kJ/cm² und 1,5 kJ/cm² aufweist.

20. Verfahren nach Anspruch 12 und 19,
**dadurch gekennzeichnet,**
**dass** der erste Laserstrahl (22) und der zweite Laserstrahl (22') auf die der ersten Laseraustrittsstelle (14) und der zweiten Laseraustrittsstelle (15) zugewandte Oberfläche oder auf die der ersten Laseraustrittsstelle (14) und der zweiten Laseraustrittsstelle (15) abgewandte Oberfläche des Substrats fokussiert werden oder dass der erste Laserstrahl (22) und der zweite Laserstrahl (22') auf einander gegenüberliegende Oberflächen des Substrats (17) fokussiert werden.

## Claims

1. Device (10, 20) for edge-stripping and for grooving of a coated transparent substrate (17), with a first laser source (14) for edge stripping of the coated substrate (17), a second laser source (15) for forming a groove in the stripped edge strip (30) of the substrate (17),
**characterised by:**
a transport system (11, 11') for supporting the transparent substrate (17) provided with a coating (19) and moving the substrate in an x-direction,
a bridge (12) which is arranged on one side of a surface of the substrate (17) and perpendicular to the transport system (11, 11'), wherein a first laser outlet location (34) and a separate second laser outlet location (35) are mounted on the bridge so as to be moveable in a y-direction perpendicular to the x-direction,
an adjusting unit (16) by means of which the first laser outlet location (34) is mounted on the bridge (12) for edge stripping, wherein the adjusting unit (16) is configured in order to move the first laser beam (22) in the x- or y-direction over the substrate (17) to be stripped for areal erosion of the coating (19),
wherein the first laser source (14) emits a first laser beam (22) at the first laser outlet location (34), and
wherein the second laser source emits a second laser beam (22') at the second laser outlet location (35).

2. Device according to claim 1,
**characterised in that**
the first and the second laser beams (22, 22') are focussed on the surface of the substrate (17) facing towards the first laser outlet location (34) and the second laser outlet location (35) or are focussed through the substrate (17) on the surface of the substrate (17) facing away from the two laser outlet locations (34, 35) or are focussed on a surface of the substrate (17) facing away from the laser outlet locations (34, 35) and a surface of the substrate (17) facing towards the laser outlet locations (34, 35).

3. Device according to claim 1 or 2,
**characterised in that**
the first laser beam (22) has an energy density distribution which is essentially constant over the beam cross-section, in particular a top hat profile.

4. Device according to claim 3,
**characterised in that**
the beam cross-sections of two successive first laser beams (22) overlap by half.

5. Device according to one of claims 1 to 4,
**characterised in that**
the first laser source (14) emits laser light of a wavelength of between 1000 nm and 1600 nm, preferably of between 1000 nm and 1100 nm, particularly preferably of 1020 nm and 1070 nm, and/or the first laser source (14) is operated in pulsed mode with a pulse duration of between 1 ns and 100 ns, preferably of between 25 ns and 35 ns, and/or the first laser source (14) exhibits a pulse energy density of from 0.1 J/cm² to 1 J/cm².

6. Device according to one of claims 1 to 5,
**characterised in that**
the second laser source (15) is focussed directly on a surface of the substrate (17).

7. Device according to one of claims 1 to 6,
**characterised in that**
the second laser beam (22') exhibits a Gaussian energy density distribution over the beam cross-section in a radial direction.

8. Device according to one of claims 1 to 7,
**characterised in that** the second laser source (15) emits laser light of a wavelength of between 350 nm and 800 nm, preferably of from 500 nm to 550 nm, and/or the second laser source (15) is operated in pulsed mode with a pulse duration of between 1 ns and 100 ns, preferably of between 25 ns and 35 ns, and/or the second laser source (15) exhibits a pulse energy density of between 0.5 kJ/cm² and 1.5 kJ/cm².

9. Device according to one of claims 1 to 8,
**characterised in that**
a laser (31) with a first beam forming unit (32) forms the first laser source (14) and the same laser (31) with a frequency doubling unit (36) and a second beam forming unit (33) forms the second laser source (15).

10. Device according to claim 2 and 6,
**characterised in that**
the first laser beam (22) and the second laser beam (22') are focussed on the surface of the substrate (17) facing towards the first laser outlet location (14) and the second laser outlet location (15) or on the surface of the substrate (17) facing away from the first laser outlet location (14) and the second laser outlet location (15) or **in that** the first laser beam (22) and the second laser beam (22') are focussed on opposing surfaces of the substrate (17).

11. Device according to one of claims 1 to 10,
**characterised in that**
the device (10, 20) is arranged on a coating installation, on a cutting table with a breaking device or on an insulating glass production unit.

12. Method for edge stripping and for grooving of a coated transparent substrate, wherein
edge stripping of the coated substrate is carried out by means of a first laser source (14) which emits a first laser beam (22) at a first laser outlet location (34),
grooving of the stripped edge strip (30) of the substrate (17) is carried out by means of a second laser source (15) which emits a second laser beam (22') at a second laser outlet location (35),
**characterised in that**
a transport system (11, 11') for supporting the transparent substrate (17) provided with a coating (19) moves the substrate in a y-direction,
the first laser outlet location (34) and the second laser outlet location (35), which are mounted on a bridge (12) which is arranged on one side of a surface of the substrate (17) and perpendicular to the transport system (11, 11'), are moved in an x-direction perpendicular to the y-direction, and
**in that** an adjusting unit (16), by means of which the first laser outlet location (34) for edge stripping is mounted on the bridge (12), moves the first laser beam (22) in the x- and y-direction over the substrate (17) to be stripped for areal erosion of the coating (19).

13. Method according to claim 12,
**characterised in that**
the first and second laser beams (22, 22') are focussed on the surface of the substrate (17) facing towards the first laser outlet location (34) and the second laser outlet location (35) or are focussed through the substrate (17) on the surface of the substrate (17) facing away from the two laser outlet locations (34, 35) or are focussed on a surface of the substrate (17) facing away from the laser outlet locations (34, 35) and a surface of the substrate (17) facing towards the laser outlet locations (34, 35).

14. Method according to claim 12 or 13,
**characterised in that**
the first laser beam (22) exhibits an energy density distribution which is essentially constant over the beam cross-section, in particular a top hat profile.

15. Method according to claim 14,
**characterised in that**
the beam cross-sections of two successive first laser beams (14) overlap by half.

16. Method according to one of claims 12 to 15,
**characterised in that**
the first laser source (14) emits laser light of a wavelength of between 1000 nm and 1600 nm, preferably of from 1000 nm to 1100 nm, particularly preferably of 1020 nm and 1070 nm, and/or the first laser source (14) is operated in pulsed mode with a pulse duration of between 1 ns and 100 ns, preferably of between 25 ns and 35 ns, and/or the first laser source (14) exhibits a pulse energy density of from 0.1 J/cm² to 1 J/cm².

17. Method according to one of claims 12 to 16,
**characterised in that**
the second laser beam (22') is focussed directly on a surface of the substrate (17).

18. Method according to one of claims 12 to 17,
**characterised in that**
the second laser beam (22') exhibits a Gaussian energy density distribution over the beam cross-section in a radial direction.

19. Method according to one of claims 12 to 18,
**characterised in that**
the second laser source (15) emits laser light of a wavelength of between 350 nm and 800 nm, preferably of from 500 nm to 550 nm, and/or the second laser source (15) is operated in pulsed mode with a pulse duration of between 1 ns and 100 ns, preferably of between 25 ns and 35 ns, and/or the second laser source (15) exhibits a pulse energy density of between 0.5 kJ/cm² and 1.5 kJ/cm².

20. Method according to claim 12 and 19,
**characterised in that**
the first laser beam (22) and the second laser beam (22') are focussed on the surface of the substrate facing towards the first laser outlet location (14) and the second laser outlet location (15) or on the surface of the substrate facing away from the first laser outlet location (14) and the second laser outlet location (15) or **in that** the first laser beam (22) and the second laser beam (22') are focussed on opposing surfaces of the substrate (17).

## Revendications

1. Dispositif (10, 20) pour assurer l'enlèvement d'un revêtement en bordure et le rainurage d'un substrat transparent (17) revêtu, comprenant une première source laser (14) pour enlever le revêtement en bordure du substrat (17) revêtu, une deuxième source laser (15) pour produire une rainure dans la bande de bordure (30) du substrat (17) débarrassée du revêtement,
**caractérisé par** :
un système de transport (11, 11') destiné à former support d'appui pour le substrat transparent (17) muni d'un revêtement (19), et à assurer une translation du substrat dans une direction x,
un portique (12) qui est agencé sur un côté d'une surface du substrat (17) et perpendiculairement au système de transport (11, 11'), une première zone de sortie de laser (34) et une deuxième zone de sortie de laser (35) séparée étant agencées sur le portique de manière à être déplaçables dans une direction y perpendiculaire à la direction x,
une unité de réglage de déplacement (16) par l'intermédiaire de laquelle la première zone de sortie de laser (34) pour l'enlèvement du revêtement en bordure est maintenue sur le portique (12), l'unité de réglage de déplacement (16) étant conçue, en vue d'assurer l'enlèvement de surface du revêtement (19), pour déplacer le premier faisceau laser (22) dans la direction x, respectivement dans la direction y, par-dessus le substrat (17) dont le revêtement doit être enlevé,
la première source laser (14) émettant un premier faisceau laser (22) au niveau de la première zone de sortie de laser (34), et
la deuxième source laser émettant un deuxième faisceau laser (22') au niveau de la deuxième zone de sortie de laser (35).

2. Dispositif selon la revendication 1,
**caractérisé**
**en ce que** le premier et le deuxième faisceau laser (22, 22') sont focalisés sur la surface du substrat (17), qui est dirigée vers la première zone de sortie de laser (34) et la deuxième zone de sortie de laser (35), ou sont focalisés, à travers le substrat (17), sur la surface du substrat (17), qui est opposée à celle située du côté des deux zones de sortie de laser (34, 35), ou sont focalisés sur une surface opposée à celle située du côté des zones de sortie de laser (34, 35) et sur une surface du substrat (17), qui est dirigée vers les zones de sortie de laser (34, 35).

3. Dispositif selon la revendication 1 ou la revendication 2,
**caractérisé**
**en ce que** le premier faisceau laser (22) présente une répartition de densité énergétique sensiblement constante sur la section transversale du faisceau, notamment un profil en forme de chapeau haut-de-forme.

4. Dispositif selon la revendication 3,
**caractérisé**
**en ce que** les sections transversales de faisceau de deux premiers faisceaux laser (22) qui se succèdent, se chevauchent mutuellement de moitié.

5. Dispositif selon l'une des revendications 1 à 4, **caractérisé**
**en ce que** la première source laser (14) émet une lumière laser d'une longueur d'onde entre 1000 nm et 1600 nm, de préférence entre 1000 nm et 1100 nm, de façon particulièrement préférée aux alentours de 1020 nm et 1070 nm, et/ou la première source laser (14) fonctionne en mode pulsé avec une durée d'impulsion entre 1 ns et 100 ns, de préférence entre 25 ns et 35 ns, et/ou la première source laser (14) présente une densité énergétique d'impulsion de 0,1 J/cm² à 1 J/cm².

6. Dispositif selon l'une des revendications 1 à 5,
**caractérisé**
**en ce que** la deuxième source laser (15) est focalisée directement sur une surface du substrat (17).

7. Dispositif selon l'une des revendications 1 à 6,
**caractérisé**
**en ce que** le deuxième faisceau laser (22') présente une répartition de densité énergétique en forme de courbe de Gauss sur la section transversale de faisceau, dans la direction radiale.

8. Dispositif selon l'une des revendications 1 à 7,
**caractérisé**
**en ce que** la deuxième source laser (15) émet une lumière laser d'une longueur d'onde entre 350 nm et 800 nm, de préférence de 500 nm à 550 nm, et/ou la deuxième source laser (15) fonctionne en mode pulsé avec une durée d'impulsion entre 1 ns et 100 ns, de préférence entre 25 ns et 35 ns, et/ou la deuxième source laser (15) présente une densité énergétique d'impulsion entre 0,5 kJ/cm² et 1,5 kJ/cm².

9. Dispositif selon l'une des revendications 1 à 8,
**caractérisé**
**en ce qu'**un laser (31) forme, avec une première unité de formation de faisceau (32), la première source laser (14), et le même laser (31) forme, avec une unité de doublement de fréquence (36) et une deuxième unité de formation de faisceau (33), la deuxième source laser (15).

10. Dispositif selon la revendication 2 et la revendication 6,
**caractérisé**
**en ce que** le premier faisceau laser (22) et le deuxième faisceau laser (22') sont focalisés sur la surface du substrat (17), qui est dirigée vers la première zone de sortie de laser (14) et la deuxième zone de sortie de laser (15), ou sur la surface opposée à celle située du côté de la première zone de sortie de laser (14) et de la deuxième zone de sortie de laser (15), ou en ce que le premier faisceau laser (22) et le deuxième faisceau laser (22') sont focalisés sur des surfaces du substrat (17), qui sont mutuellement opposées.

11. Dispositif selon l'une des revendications 1 à 10,
**caractérisé**
**en ce que** le dispositif (10, 20) est agencé dans une installation de revêtement, sur une table de découpage avec un dispositif de bris, ou dans une unité de fabrication de vitrages isolants.

12. Procédé pour assurer l'enlèvement d'un revêtement en bordure et le rainurage d'un substrat transparent revêtu, d'après lequel
on produit un enlèvement de revêtement en bordure du substrat revêtu, au moyen d'une première source laser (14), qui émet un premier faisceau laser (22) au niveau d'une première zone de sortie de laser (34),
on produit un rainurage de la bande de bordure (30) du substrat (17) débarrassée du revêtement, au moyen d'une deuxième source laser (15), qui émet un deuxième faisceau laser (22') au niveau d'une deuxième zone de sortie de laser (35),
**caractérisé**
**en ce qu'**un système de transport (11, 11') formant support d'appui pour le substrat transparent (17) muni d'un revêtement (19), assure une translation du substrat dans une direction y,
**en ce que** la première zone de sortie de laser (34) et la deuxième zone de sortie de laser (35), qui sont placées sur un portique (12) agencé sur un côté d'une surface du substrat (17) et perpendiculairement au système de transport (11, 11'), sont déplacées dans une direction x perpendiculaire à la direction y, et
**en ce qu'**une unité de réglage de déplacement (16), par l'intermédiaire de laquelle la première zone de sortie de laser (34) pour l'enlèvement de revêtement en bordure est maintenue sur le portique (12), déplace le premier faisceau laser (22) dans la direction x respectivement dans la direction y par-dessus le substrat (17) dont le revêtement doit être enlevé, en vue d'assurer l'enlèvement de surface du revêtement (19).

13. Procédé selon la revendication 12,
**caractérisé**
**en ce que** le premier et le deuxième faisceau laser (22, 22') sont focalisés sur la surface du substrat (17), qui est dirigée vers la première zone de sortie de laser (34) et la deuxième zone de sortie de laser (35), ou sont focalisés, à travers le substrat (17), sur la surface du substrat (17), qui est opposée à celle située du côté des deux zones de sortie de laser (34, 35), ou sont focalisés sur une surface opposée à celle située du côté des zones de sortie de laser (34, 35) et sur une surface du substrat (17), qui est dirigée vers les zones de sortie de laser (34, 35).

14. Procédé selon la revendication 12 ou la revendication 13,
**caractérisé**
**en ce que** le premier faisceau laser (22) présente une répartition de densité énergétique sensiblement constante sur la section transversale du faisceau, notamment un profil en forme de chapeau haut-de-forme.

15. Procédé selon la revendication 14,
**caractérisé**
**en ce que** les sections transversales de faisceau de deux premiers faisceaux laser (14) qui se succèdent, se chevauchent mutuellement de moitié.

16. Procédé selon l'une des revendications 12 à 15,
**caractérisé**
**en ce que** la première source laser (14) émet une lumière laser d'une longueur d'onde entre 1000 nm et 1600 nm, de préférence de 1000 nm à 1100 nm, de façon particulièrement préférée aux alentours de 1020 nm et 1070 nm, et/ou la première source laser (14) fonctionne en mode pulsé avec une durée d'impulsion entre 1 ns et 100 ns, de préférence entre 25 ns et 35 ns, et/ou la première source laser (14) présente une densité énergétique d'impulsion de 0,1 J/cm² à 1 J/cm².

17. Procédé selon l'une des revendications 12 à 16,
**caractérisé**
**en ce que** l'on focalise le deuxième faisceau laser (22') directement sur une surface du substrat (17).

18. Procédé selon l'une des revendications 12 à 17,
**caractérisé**
**en ce que** le deuxième faisceau laser (22') présente une répartition de densité énergétique en forme de courbe de Gauss sur la section transversale de faisceau, dans la direction radiale.

19. Procédé selon l'une des revendications 12 à 18,
**caractérisé**
**en ce que** la deuxième source laser (15) émet une lumière laser d'une longueur d'onde entre 350 nm et 800 nm, de préférence de 500 nm à 550 nm, et/ou la deuxième source laser (15) fonctionne en mode pulsé avec une durée d'impulsion entre 1 ns et 100 ns, de préférence entre 25 ns et 35 ns, et/ou la deuxième source laser (15) présente une densité énergétique d'impulsion entre 0,5 kJ/cm² et 1,5 kJ/cm².

20. Procédé selon la revendication 12 et la revendication 19,
**caractérisé**
**en ce que** l'on focalise le premier faisceau laser (22) et le deuxième faisceau laser (22') sur la surface du substrat, qui est dirigée vers la première zone de sortie de laser (14) et la deuxième zone de sortie de laser (15), ou sur la surface opposée à celle située du côté de la première zone de sortie de laser (14) et de la deuxième zone de sortie de laser (15), ou en ce que l'on focalise le premier faisceau laser (22) et le deuxième faisceau laser (22') sur des surfaces mutuellement opposées du substrat (17).
